# EUROPEAN PATENT APPLICATION

(11) **EP 1 598 772 A2**
(43) Date of publication of application: **23.11.2005**
(21) Application number: 05104246.3
(22) Date of filing: 19.05.2005
(51) Int. Cl.: G06K 17/00

(54) **Control of modules having programmable tags**

(30) Priority: 20.05.2004 US 849974
(71) Applicant: Xerox Corporation, Rochester, New York 14644 (US)
(72) Inventor: Rommelmann, Heiko, Penfield, NY 14526 (US); Rodriguez, Alberto, Webster, NY 14580 (US); Bell, Scott J., Rochester, NY 14619 (US)
(74) Representative: Grünecker, Kinkeldey, Stockmair & Schwanhäusser Anwaltssozietät

(57) **Abstract**

Control of a module (30) involves providing the module (30) with an electronic tag (20) comprising a tag memory (22) and a tag communication element (26). After the tag is associated with the module, a tag reader electronically reads identification information from the tag and verifies that the module identification information matches predetermined identification criteria. If the identification information matches, a tag writer programs the tag with configuration information. The configuration information places the module into a predetermined module configuration.

## Description

### BACKGROUND AND SUMMARY

The present invention relates to control of programmable devices or modules. In one aspect, the present invention is particularly useful in inventory and configuration control of modules that are physically identical but can be programmed with alternative configurations.

Various systems allow a user to track items such as manufactured devices or packages. For example, a barcode containing a model number or a serial number or other identifying indicia can be printed on a device or a package. An optical scanner connected to a tracking system can scan the barcode, so that the tracking system can determine the identity and location of the marked item. Such barcode systems rely on "line of sight" access from the barcode reader to the barcode on the item being tracked. In addition, while the tracking system can record various information pertaining to the location and status of the tracked item, the tracked item itself does not retain any information as to where it has been, or what processing steps have been performed on it.

More recently, radio frequency identification (RFID) devices include radio frequency transmitters that have been applied to products for tracking purposes. Such RFID devices contain information that they can transmit to a reader. The radio frequency transmitters do not require "line of sight" access from the reader.

Magnetic tags and sensors have also been demonstrated to track and verify the identity of products. Magnetic tags require close proximity between the information bearing tag and the sensor.

In various instances, holders or transporters of products may wish to alter certain information pertaining to a particular product after the product has been manufactured and entered the distribution channel. For example, a person may wish to know when a product passed through a particular stage in the distribution channel. Such information is important to maintain the freshness of time-sensitive inventory. Also, for certain types of products, such information can be used to detect if the product may have been inappropriately detoured along the distribution channel, which detours could indicate tampering or other mishandling of the product.

In other instances, certain families of products may be physically identical but have different programmable characteristics. If the programmable characteristics are set to create separate "products" when the product first enters the distribution channel, inventory control is complicated because the holder of the inventory must manage the inventory of several different products.

In accordance with an aspect of the invention, a method and apparatus are adapted to verify the authenticity and identity of an electronic tag before programming the tag with configuration information for the configuration of a module with which the tag is associated.

In accordance with another aspect of the invention, a method of processing a module that has at least first and second programmable configurations includes providing the module with an electronic module tag, the tag including a tag memory. The method further includes electronically obtaining module identification information from the electronic module tag and verifying that the module identification information matches predetermined identification criteria. If the module identification information matches the predetermined identification criteria, selectively programming the module tag with either the first programmable configuration or the second programmable configuration.
In one embodiment selectively programming the module tag with either the first programmable configuration or the second programmable configuration comprises using a programming system to program the module tag; and
the method additionally comprises, before programming the tag memory with either the first configuration or the second configuration, verifying that programming the tag is authorized by predetermined programming permissions.
In a further embodiment programming the module tag with either the first programmable configuration or the second programmable configuration occurs only if programming the tag is authorized by the predetermined programming permissions.
In a further embodiment providing the module with an electronic module tag comprises attaching the electronic module tag to the module.
In a further embodiment providing the module with an electronic module tag comprises placing the module in a container having the electronic module tag.

In accordance with yet another aspect of the invention, a method of processing a module for a printing apparatus includes providing a module having associated with it an electronic module tag that includes a tag memory containing authentication information and module identification information. The method further includes electronically reading the tag authentication information from the module tag, electronically verifying that the tag authentication information matches predetermined authentication criteria, and electronically reading the module identification information from the module tag. If the tag authentication information matches the predetermined authentication criteria, electronically programming the module tag memory with module configuration information authorized for the module identification information.
In a further embodiment the method additionally comprises determining whether the module identification information matches first module identification criteria or second module identification criteria, and wherein electronically programming the module tag memory with module configuration information authorized for the module identification information comprises:
programming the module tag memory with the first configuration information if the module identification information matches the first identification criteria; and
programming the module tag memory with the second configuration information if the module identification information matches the second identification criteria.
In a further embodiment electronically programming the module tag memory with module configuration information authorized for the module identification information comprises:
selectively providing either first configuration setup information or second configuration setup information; and
programming the module tag with either the first programmable configuration or the second programmable configuration comprises:
   programming the module tag with the first programmable configuration if the first configuration setup information is provided; and
   programming the module tag with the second programmable configuration if the second configuration setup information is provided.
In a further embodiment the step of obtaining module identification information from the module tag comprises:
transmitting an identification request to the module tag;
causing the module tag to calculate an identification response in accordance with predetermined identification processes; and
causing the module tag to transmit the identification response.
In a further embodiment:
transmitting the identification request to the module tag comprises transmitting the identification request over a wireless communication link; and
causing the module tag to transmit the identification response comprises causing the module tag to transmit the identification response over a wireless communication link.

In accordance with yet a further aspect of the invention, an apparatus for programming an electronic tag associated with a module includes a tag reader for electronically reading tag identification information from individual ones of electronic module tags that are associated with modules. The apparatus also includes a processor for verifying that the tag identification information read from a selected one of the module tags matches predetermined identification criteria and for producing configuration information to associate with the tag identification information if the tag identification information matches the identification criteria. The apparatus additionally includes a tag writer for writing the configuration information to the selected module tag.
In a further embodiment the tag writer writes the configuration information to the selected module tag only if the tag identification information matches the identification criteria.
In a further embodiment:
the apparatus additionally comprises a user input for receiving configuration setup information;
the processor additionally determines whether the configuration setup information received at the user input is authorized for the identification information; and
the apparatus additionally comprises a user notification element for notifying a user whether the configuration setup information is authorized for the identification information.
In a further embodiment the user notification element produces an audible signal.
In a further embodiment the user notification element produces a visual signal.

### BRIEF DESCRIPTION OF THE DRAWINGS

Figure 1 shows an exemplary application of a programmable module tag to a module.

Figure 2 shows an exemplary application of a programmable module tag to a container for a module.

Figure 3 shows another application of a programmable module tag to a container for a module.

Figure 4 shows the programmable module tag applied as shown in Figure 3, after the container has been opened.

Figure 5 shows an exemplary implementation of a programmable module tag.

Figure 6 illustrates a use of a stationary module tag programmer to program a module tag.

Figure 7 illustrates a use of a portable tag programmer to program a module tag.

Figure 8 is a perspective view of one implementation of a portable module tag programmer.

Figure 9 is a cross-sectional view of the portable module tag programmer of Figure 8, taken along line 9 - 9 of Figure 8.

Figure 10 is a top view of the portable module tag programmer of Figure 8.

Figure 11 is a rear end view of the portable module tag programmer of Figure 8.

Figure 12 is a conceptual illustration of a printing apparatus incorporating one implementation of a module tag reader.

Figure 13 is a simplified elevational view of the installation of a portion of the printing apparatus of Figure 12.

### DETAILED DESCRIPTION

Programmable tags are attached to, or otherwise associated with, various types of products, such as replaceable modules for printing apparatus or other machinery. Such programmable tags include a tag memory in which information can be stored.

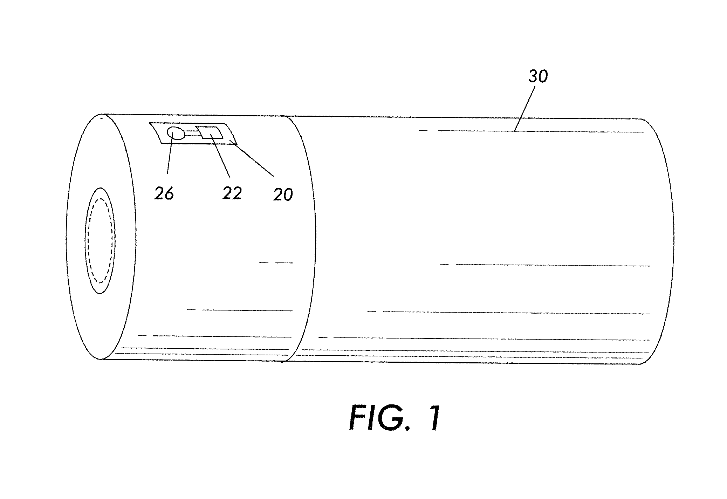

Referring to Figure 1, a programmable electronic module tag 20 is associated with a module, such as a replacement part or consumable element for machinery or systems. Particular implementations will be described in the context of a consumable module for a printing apparatus, in particular a toner cartridge 30 containing consumable toner. The cartridge 30 is intended for insertion into a xerographic printing apparatus, in which toner is dispensed from the cartridge for use in the printing process. The person of skill in the art, having reviewed the subject disclosure, will recognize that the principles thereof can be applied to a wide variety of systems and uses. The term "module" is used to mean any device to which an electronic tag might be attached, or with which a tag might be associated.

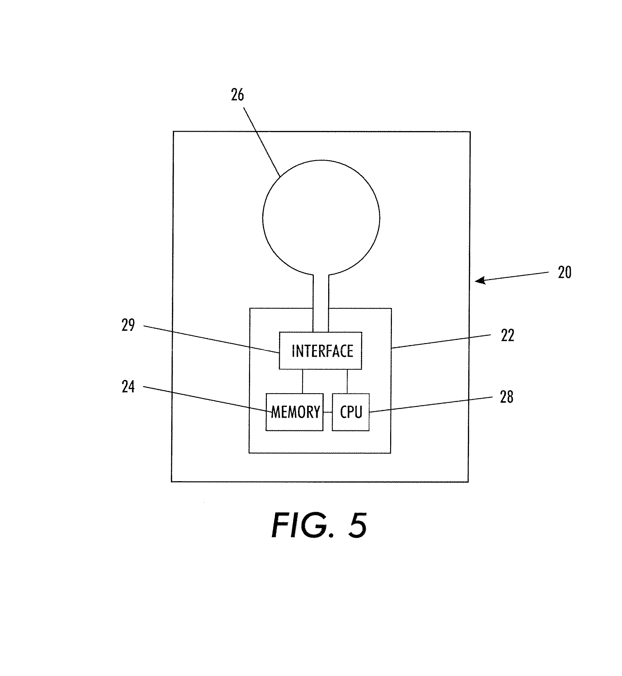

An exemplary electronic module tag 20 is shown in Figure 5. The electronic tag includes tag electronics 22 that include tag memory 24 for storing information, and a tag communication element 26 for communicating information to and from the electronic module tag. A processor (CPU) 28 provides computational and other capabilities. Interface electronics 29 connect the CPU 28, memory 24, and communication element 26. Many configurations are available for arranging and connecting elements of the electronic module tag.

In a particular implementation, the communication element 26 is a wireless communication element for establishing a wireless communication link with another device. In a particular implementation, the wireless communication element is a radio frequency (RF) antenna for establishing a radio frequency communication link with another device.

The wireless communication element can be an active element, powered by a power source, such as a battery (not shown) embedded on the tag. Alternatively, the wireless communication element can be passive. Such a passive element is energized by the RF signal it receives from another device, such as an RF reader that queries the tag, or an RF writer that delivers information to the tag. Energy from the reader or writer is sufficient to briefly power the RF antenna and interface electronics to enable the RF antenna to receive and transmit information.

Information is stored in the tag memory contained within the tag electronics. Particular information can be stored at particular locations in the tag memory. One path for receiving information to store in the tag memory is through the RF antenna. Information can also be read from the memory. When the communication element is activated, the RF antenna can transmit selected information from the tag memory.

In addition to, or in lieu of, the wireless communication element 26, a wired communication element (not shown) may connect the tag memory 24 through a plug or other connector to an external communication system for delivering information to, and drawing information from, the tag memory.

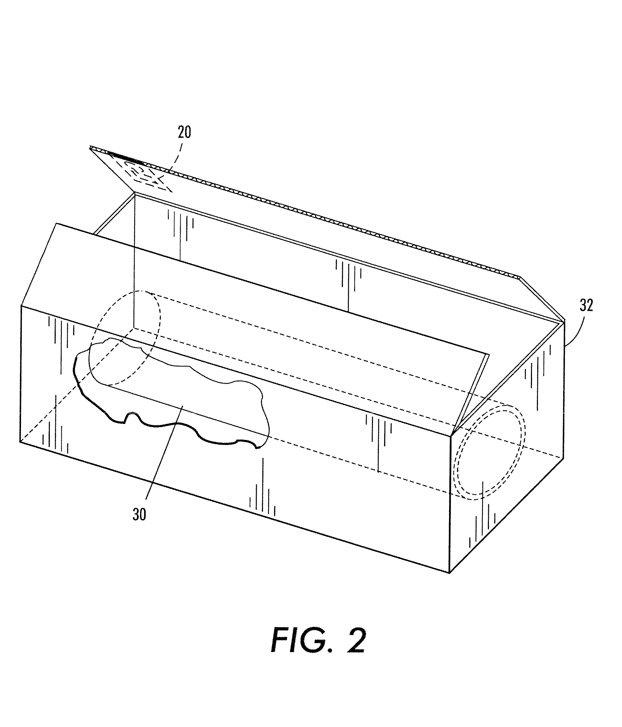

The electronic module tag 20 can be attached directly to the toner cartridge module 30, as shown in Figure 1. In addition, or in alternatives, the module 30 is enclosed within a container 32 for storage and transport, as shown in Figures 2 ― 4. As seen in the embodiments of Figure 2, the tag 20 is embedded in the material forming the container (such as corrugated cardboard). Although a rectilinear container is shown, other shapes can be used for the container. In addition to the replaceable module for the printing apparatus, the container may also enclose packing material (not shown) to protect the enclosed module. In some instances, the container may enclose multiple modules, which may be identical to one another, or may form a set of related modules. The module, such as the toner cartridge 30, is associated with an electronic module tag 20 on the container 32 by placing the module in the container having the programmable electronic tag 20. The module enclosed within the container may or may not have a separate electronic tag 20 affixed directly to the module (Figure 1).

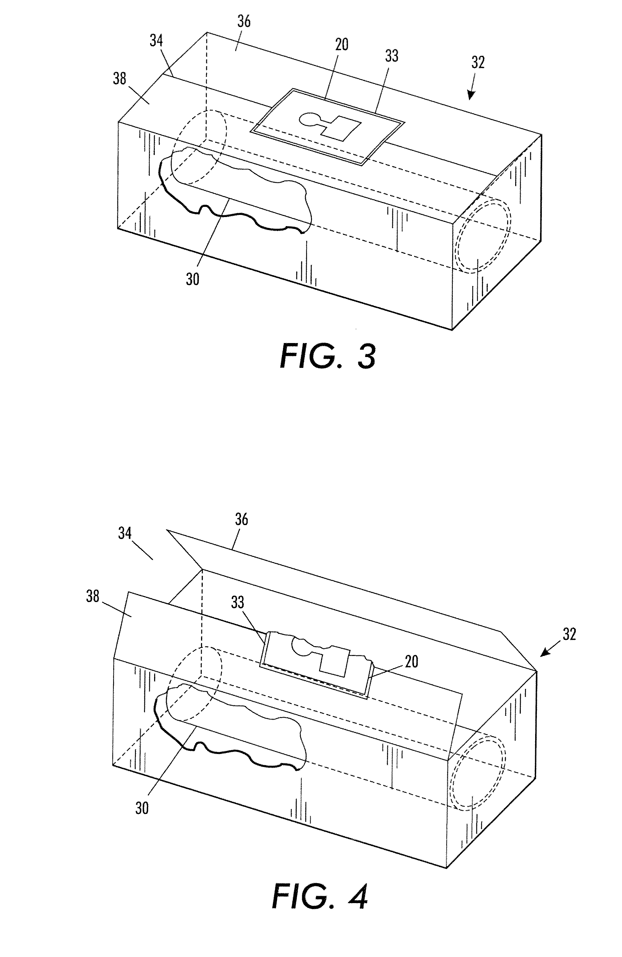

In an example shown in Figures 3 and 4, the electronic tag 20 is attached with a label 33 to the container 32. One portion of the container (shown in Figure 3 as the top) has an opening separation 34 that is adapted to expand upon opening the container. In the particular implementation illustrated, the opening separation is formed in the top surface by forming the top surface as two sections 36, 38 of container material that meet at a seam. The container with the opening separation expanded to open the container is shown in Figure 4. Other types of opening separations are also known. For example, the container may be formed of a container body with an open side and a separate piece of material to form a lid, having an opening separation that extends around the perimeter of the lid, where the edge of the lid meets the container body. Other types of opening separations might include a pull tab that tears the container material, or that has a line of perforations to permit the pull tab to separate to sections of the container. The label bearing the electronic tag is securely attached to the container, preferably spanning the opening separation.

Information can be stored in the tag memory of the module tag 20 after the module tag has been attached to a particular module, attached to the container enclosing a particular module, or in some other manner associated with a particular module. Thus, information can be added to the tag memory at different times and when the module is at different locations.

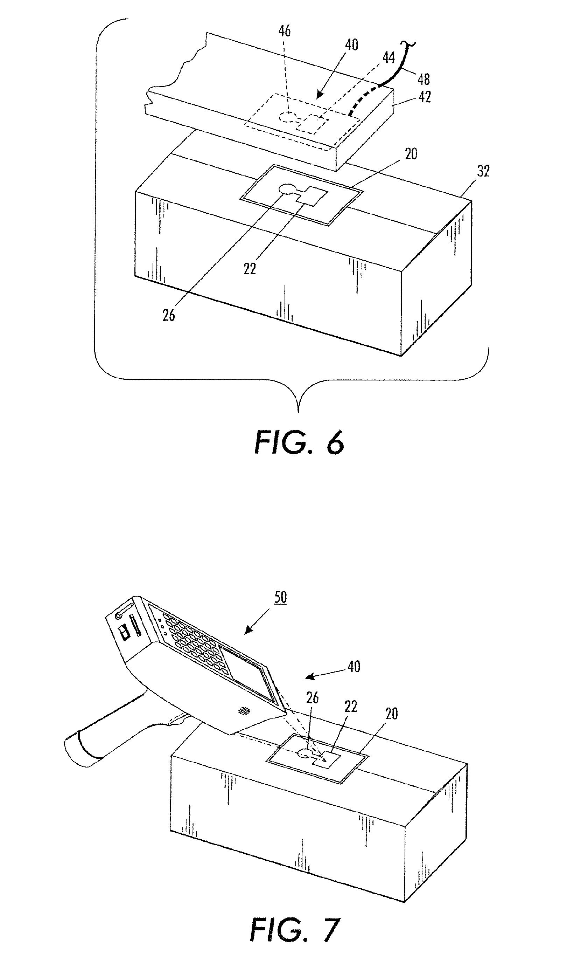

A tag programmer 40 (Figures 6 and 7) is adapted to program the module tag 20 after the module tag has been associated with a particular module. The tag programmer is adapted to cause information to be stored in the tag memory of a tag associated with a particular module.

The tag programmer 40 may have a fixed location, as shown in Figure 6. The tag programmer is secured to a programmer fixture 42. The stationary tag programmer and its fixture are configured so that a module or a container enclosing a module, bearing a programmable electronic module tag, can be brought into proximity with the tag programmer. In other implementations, the tag programmer may be included in a portable tag processing device, as shown in Figure 7.

The tag programmer 40 includes a tag reader that can electronically read information from the electronic module tag, and a tag writer that can program information into the electronic module tag. In either the fixed or portable tag programmer, most, if not all, components may be shared between the tag reader and the tag writer. The tag programmer 40 includes tag programmer electronics 44 (shown stylistically), and a tag programmer communication element 46. The tag programmer communication element 46 communicates with the tag communication element 26 of the electronic tag to form a communication link between the tag programmer and the electronic module tag.

In an example, the tag programmer communication element 46 is a wireless communication element, such as an RF antenna. The RF antenna of the tag programmer emits sufficient energy to energize the RF antenna of the wireless communication element 26 of the tag when the tag programmer communication element 46 and the tag communication element 26 are within a predetermined operating range of one another. Thus, the tag programmer establishes a communication link between the tag programmer and the electronic tag.

Once a communication link is established between the tag programmer and the electronic tag, the tag programmer and the electronic tag can exchange information across that communication link. Although a radio frequency wireless communication link is shown, other types of communication links can also be used. For example, wires connected with plugs or sockets (not shown) can provide wired communication links between the tag reader and the electronic tag. An external communication link provided by, for example, a wire or cable 48, allows data to pass to and/or from the tag programmer to another system, such as a computer or other information management system.

A tag processing device 50 incorporating the tag programmer 40 includes user interface components. Such user interface components include a user input element so a user can provide information to the tag programmer, and a user notification element so the tag programmer can convey information to the user.

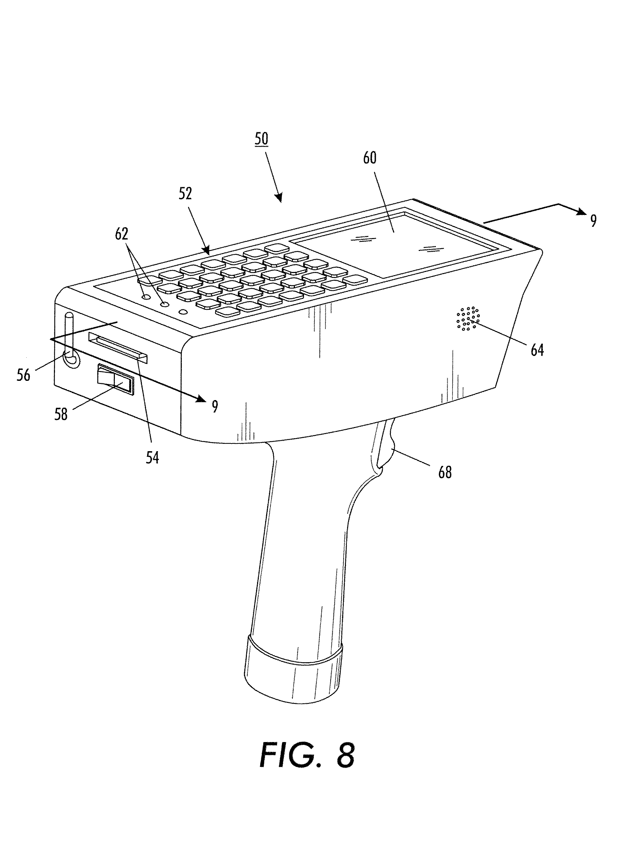

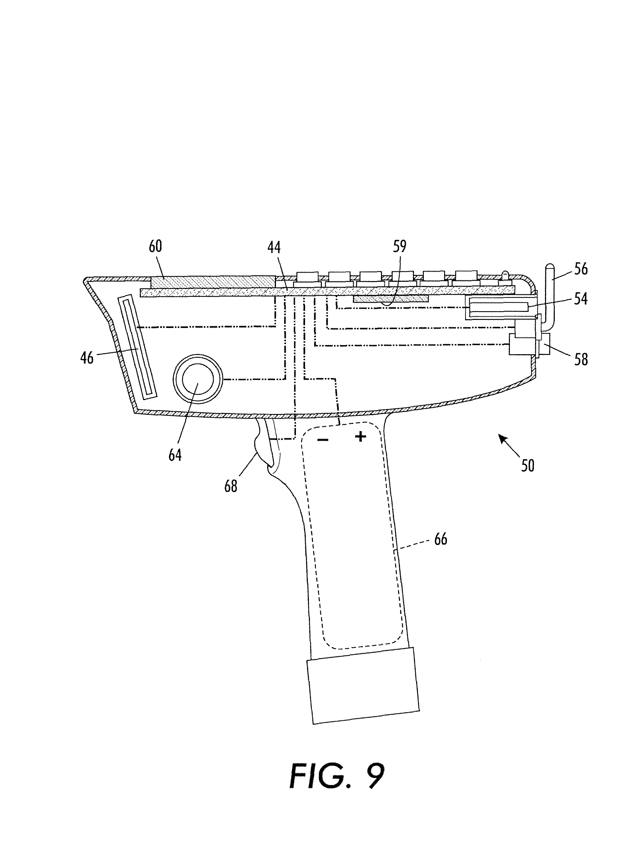

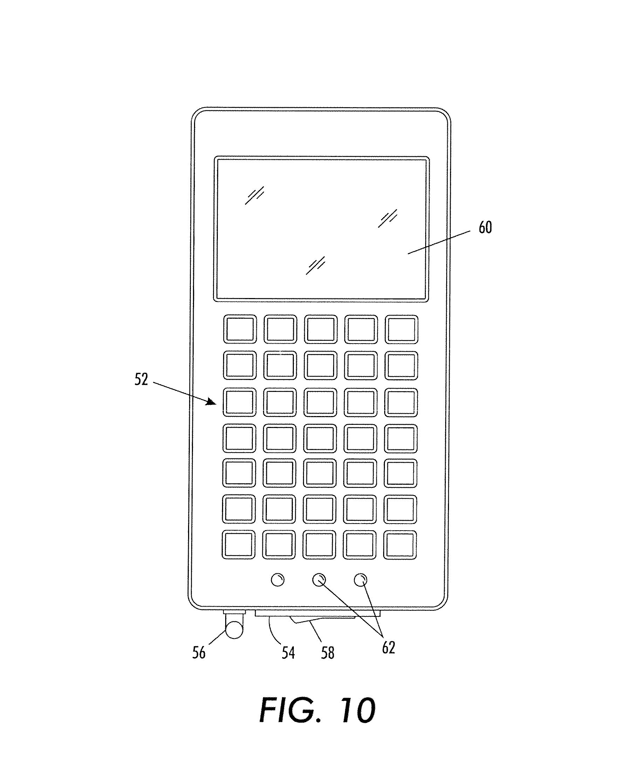

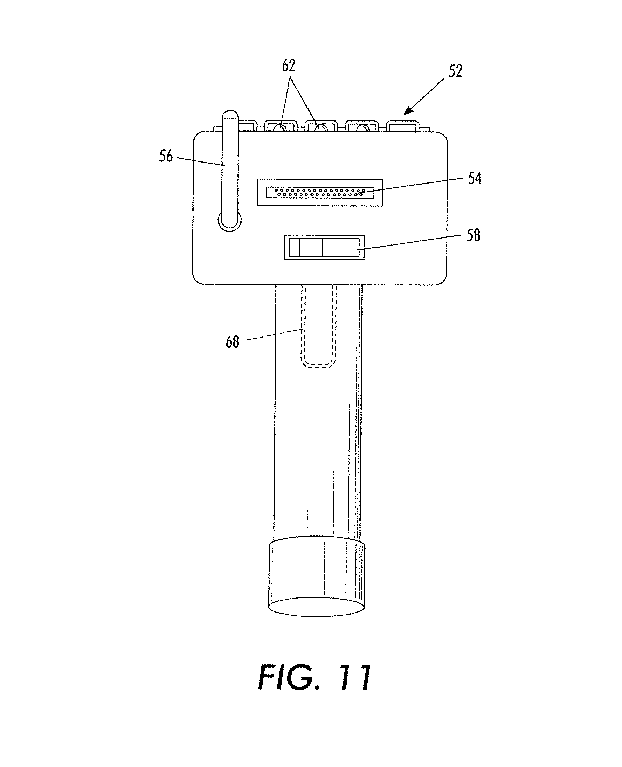

An exemplary portable tag programmer is shown in Figures 8 - 11. The user input element includes a keypad 52 connected to the programmer electronics 44. The keypad provides a means for a user to supply input information, such as programming instructions, to the processor electronics 44 of the tag programmer. In another implementation, a microphone and voice recognition capabilities can be used as a user input element. Such a microphone and voice recognition capability can reside on a computer, and be connected through a wired communications port 54 to provide user input signals from the computer to the tag programmer. A connecting device, such as a cable, is selectively attached to the wired communications port. The progammer electronics of the tag processing device may include device memory for storing information during operation. Internal storage allows the tag processing device to download (or upload) data and information at intervals. This capability to store information allows tag processing device to be operated for a time without being in continuous communication with an external system through the communications port.

In other implementations, the user can supply input information through a computer, using the computer's keyboard or mouse. The information input to the computer can be translated as user input signals from the computer to the tag programmer through the communications port 54. Communication to the portable tag programmer can also be conducted wirelessly, such as with infrared or radio frequency signals. An external antenna 56 provides an exemplary connection point for receiving user input information from another element or system over a wireless communication link. An antenna switch 58 provides the ability to connect or disconnect the external antenna, or to transfer communication capability between the external antenna and the communications port 54. Persons familiar with the art will identify other mechanisms for supplying information from a user to the tag processing device 50 for use by the tag programmer.

The tag programmer electronics 44 include a data processor 59. The data processor processes data received at the programmer communication element 46, and also information received from the user input element 52. The data processor manipulates the data according to predetermined criteria. For example, the data processor can be adapted to interpret instructions received from the user input element, to verify information that is received from a module tag over the programmer communication element 46, or to perform calculations upon data received from the module tag. The tag programmer processor is also adapted to cause certain information to be communicated to the module tag, such as by transmitting the information over the programmer communication element 46.

The user interface of the tag processing device also includes user notification elements for communicating information to the user. The user notification elements may include a graphical user interface 60, signal lights 62, and/or an audio output 64. The graphical user interface is adapted to display graphical or text messages, and may be a liquid crystal display (LCD) screen. The programmer electronics controls the messages displayed on the graphical user interface. The graphical user interface can also display information confirming the data entered by the user on the keypad 52.

Signal lights 62 can provide simple visual signals to the user. For example, two signal lights may be included, with one red to indicate a negative condition or result, and the other green to indicate a positive condition or result. A third signal light may indicate a separate function, such as a power-on condition, or may provide a tri-level condition indicator. Other embodiments may have other numbers of signal lights. The signal lights may be light emitting diodes (LED's) or other light emitting devices.

An audio output, such as a speaker 64, is adapted to provide additional user notification by emitting one or more audible signals. Different types of audible signals may signal different conditions. For example, a 'buzzer' tone may indicate a negative condition or result, while a 'beep' tone may indicate a positive condition or result. Audible signals can be used to draw attention to certain conditions. In certain instances, simple signaling devices such as the signal lights and the audio signal output may be able to provide sufficient information to the user, eliminating the need for the graphical user interface.

For extended portability, the portable tag processing device 50 is powered by a self-contained battery 66. A switch 68 allows the user to selectively turn the tag processing device on and off. In other examples, the portable tag processing device is tethered to a power source with a power cord (not shown).

Although not shown, various of the user interface elements shown and described in connection with the portable tag processing device 50 can be included with the stationary tag programmer shown in Figure 6.

In certain applications, it may be useful to limit the amount of the tag programmer and other elements of the tag processing device that are positioned to be at the point of use at which the tag programmer is proximate the module or module-enclosing container having the programmable module tag. For example, only the tag programmer antenna 46 and some immediate support electronics may be at the point of use. Other portions of the processor electronics and the user interface elements can be positioned remote from the point of use, connected to the tag programmer antenna by additional communication elements (not shown).

Figures 6 and 7 conceptually illustrate programming the electronic module tag that is associated with a module. Although the drawing shows an arrangement in which the programmable electronic module tag 20 is secured to a container 32 enclosing the module, persons skilled in the art will recognize that the process can also be applied to an electronic module tag attached to the module itself. The process can be applied to a module having an attached module tag whether the module is enclosed within a container or outside of a container.

With the tag programmer 40 stationary, as shown in Figure 6, the electronic module tag 20 is brought into proximity with the tag programmer by bringing the module with which the electronic module tag 20 is associated into proximity with the tag programmer. For example, the container 32 enclosing the module 30 (Figure 3) and bearing the electronic module tag 20 is brought close enough to the stationary tag programmer that the communication link is established between the electronic module tag and the tag programmer. The communication link is established through the tag programmer communication element 46 and the module tag communication element 26. With the portable tag processing device 50 including the tag programmer, the tag programmer can be brought into proximity with the electronic module tag.

When a communication link is established between the tag programmer and the electronic module tag, the tag reader of the tag programmer 40 can read information from the tag memory 24 of the electronic module tag 20 (Figure 5). For example, the tag reader may read tag identification information from the tag memory. Such tag identification information may include authentication information that the tag reader can use to verify the genuineness of the electronic module tag. In addition to, or instead of, authentication information, the tag reader may read other identification information that identifies a model number or a configuration status for the module with which the electronic module tag is associated. The user may press a special purpose button on the keypad 52 of the tag processing device to initiate the tag reading process. Or the tag processing device may be configured to periodically emit tag reading instructions whenever the tag processing device is turned on.

The tag processing device emits an identification request. The tag electronics 22 are configured to respond to the identification request by transmitting a tag response that includes the identification information. The nature of the identification request and the tag response depends on details of design, and may include additional security features. The tag response may include data from particular locations in the tag memory 24. Or, for enhanced security, the tag CPU 28 may calculate a tag response based on particular data from the tag memory, and perhaps information contained in the identification request. Persons familiar with data communication and data security will be familiar with various techniques to provide data and data security over a communication link such as the communication link between the electronic module tag and the tag reader segment of the tag programmer. The tag programmer communication element 46 receives the tag response, and directs the tag response signal to the appropriate reader portions of the tag programmer electronics 44.

The tag programmer communication element 46 receives the response from the module tag. This tag response includes the tag identification information from the electronic module tag. The data processor 44 verifies the tag identity by comparing the identification information in the tag response with predetermined identification criteria to determine if the identification information matches that predetermined identification criteria. Persons familiar with data verification will be familiar with various types of identification criteria, and various techniques for determining if the identification information matches the predetermined identification criteria.

If the data processor of the tag programmer verifies the identity of the electronic module tag, the data processor may cause the tag programmer to program the electronic module tag. To program the electronic module tag, the data processor causes the programmer communication element 46 to transmit configuration setup information toward the electronic module tag. The tag communication element 26 receives the transmitted configuration setup information. The tag electronics 22 are configured to then store the appropriate configuration in the tag memory 24. Such storage can take place in a variety of ways familiar to persons skilled in the art.

The user supplies the tag processing device with configuration programming instructions through the user input element of the user interface. For example, the user may press a predetermined series of keys on the keypad 52 to cause the tag programmer of the tag processing device to generate a particular set of configuration setup information.

The data processor of the tag programmer can be adapted to confirm that the user instruction for a particular set of configuration setup information is authorized for, or consistent with a particular module. The module can be identified by the identification information on the electronic tag associated with the module. The data processor can compare the identification information received from the electronic tag with predetermined identification criteria for modules authorized to receive the configuration instructions provided by the user. If the configuration instructions indicate a configuration setup authorized for the identified module, the tag programmer proceeds to program the electronic module tag. If, however, the configuration instructions indicate a configuration setup that is not authorized for the identified module, the tag processing device provides a signal to the user. Such a signal can be an audible signal on the audio output 64, a visible signal on one or more of the signal lights 62, and/or a message on the graphical user interface 60.

The tag processing device may also be adapted to verify that the user providing configuration programming instructions is authorized to do so, and to submit the particular programming instructions provided. The tag processing device may prompt the user to input user identifying information. The user may provide such user identifying information through the keypad 52, or the tag processing device may include an identification reader device for reading a key card or other device that is associated with the user.

The tag processing device may be part of the programming system provided with functionality like that described in U.S. Patent Application Serial No. 10/634,934 by Alberto Rodriguez et al., Control of Programming Electronic Devices, filed August 5, 2003, the contents of which are hereby incorporated by reference. Such functionality may include security features to control access to the programming capabilities of the programming system.

A variety of combinations of the above features may be included for maximum flexibility of use, and for security. For example, certain users can be authorized to provide only certain types of configuration programming instructions, or to provide configuration programming instructions for only certain types of modules (as identified by their tag identification information). A particular user may be authorized to provide only a limited number of configuration programming instructions (i.e., to limit the number of module tags a particular user is entitled to program).

Programming the electronic module tag after the electronic tag has been attached to the module, or after the module has been packaged allows for simpler inventory control in certain circumstances. A module with a programmable module tag can be programmed at a late stage in the distribution process with either a first configuration or a second configuration. Late programming with configuration information simplifies inventory control by allowing common modules to remain common until a time when the need for a specific configuration is clear.

In one example, one particular toner cartridge may be marketed under several different part numbers and/or pricing models. The part number and pricing of a toner cartridge for a printer printing apparatus operated on a lease agreement with a maintenance provision may have a different price designation than a toner cartridge intended for a printing apparatus owned by the user or operated without a maintenance agreement. Rather than keeping multiple stocks of modules that are physically identical, but bear different part numbers and/or prices for the different potential users, the distributor can maintain a single inventory of a particular module, and program the tag with information relevant to its nature or use once that use has been determined, such as when a customer orders the part. Thus, the tag associated with a module intended for a customer who has paid for an all inclusive maintenance program can be written as the module in the container leaves the distributor's warehouse with a first set of information identifying it as such. In addition, further information can be added to the module tag to track or verify the progress of the module in the distribution channel. As the module continues along the distribution path, that identity can be tracked with a tag reader that can read the information in the tag memory, to verify that the module does not find its way to an incorrect place. On the other hand, if a module is to be shipped to a customer who pays for supplies individually, the tag memory can be programmed with a second set of different information indicating its status as an individually paid for element.

In another exemplary use, a particular module, such as a toner cartridge, could be configured through its electronic module tag to operate in different ways depending on the apparatus into which the module is to be installed. Such differentiation may be associated with modules having the programmable electronic module tag attached to the module for reading by the apparatus into which the module is installed. For example, a module could be configured by selectively programming first configuration information into the electronic module tag to cause the module to operate in a first configuration when the module is installed in one model of apparatus, or by programming second configuration information into the electronic module tag to cause the module to operate in a second configuration when the module is installed in a different model of apparatus.

Information can be added to the tag memory at different times. Thus, certain information, such as the physical configuration of the module enclosed within the container, may be stored in the tag memory at one time, such as upon placing the module in the container. Additional information, such as the marketing part number, may be added at a later time. Yet additional information, such as tracking information indicating a particular distributor warehouse, the particular service technician who installs the module, or other information can be added at later times. Thus, tracking information can be stored in the tag memory attached to the container, so that the container itself retains a history of where it has been, and what steps have performed upon it. In this way, a subsequent tag reader can access this information and identify the history of the container enclosing the module, without requiring that the tag reader access a central tracking system.

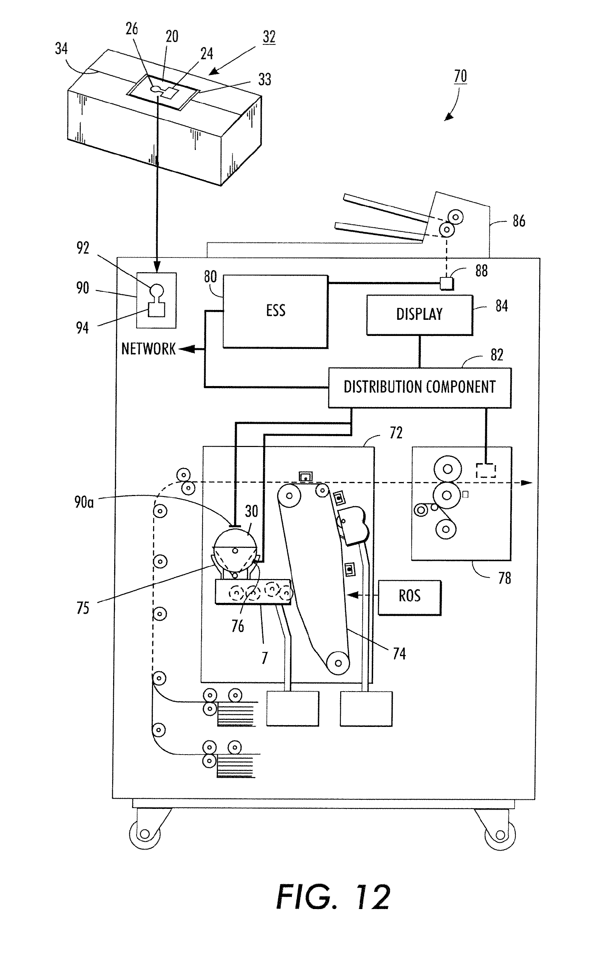

Figure 12 shows a representative printing apparatus 70 that might use the module 30 enclosed within the container 32. The representative printing apparatus includes a printing subsystem 72, which, in the illustrated example, is a xerographic printing subsystem that includes a photoreceptor 74, and a developer 73. A toner cartridge, such as the toner cartridge module 30 enclosed within the container, is inserted into the printing subsystem. The developer draws toner from the toner cartridge into the developer. The printing apparatus additionally includes a fuser subassembly 78, an electronic subsystem 80 for processing control signals, and a distribution component 82 for controlling the distribution of electronic signals from the electronic subsystem to the printing subassembly and the fusing subassembly. The distribution components may also deliver information to a graphical display 84 for conveying information to the machine user. The printing apparatus may include a copying function, in which case a document handler 86 passes documents past a scanner 88.

The printing apparatus includes a printer tag reader 90 that includes a wireless reader communication element 92 for receiving information transmitted by the communication element 26 of the module tag 20. The tag reader on the printing apparatus includes reader electronics 94 and an RF antenna forming the wireless reader communication element 92. The RF antenna emits radio frequency signals of sufficient strength to energize the RF antenna forming the tag communication element 26 on the tag when the tag is brought into proximity with the printer tag reader. Upon being energized, the tag communication element transmits information stored in the tag memory portion of the tag electronics 24. The wireless reader communication element 92 receives that information, and either processes the information within the printer tag reader electronics 94, or transmits the information it to the printer electronic subsystem 80 of the printing apparatus.

The printer tag reader electronics 94 or the printer electronic subsystem 80 analyze the tag information received from the module tag 20. The tag information read and analyzed by the printer tag reader electronics 94 or the printer electronic subsystem 80 includes the configuration information stored in the tag memory by the tag programmer 40. The analysis may be to verify that the tag information indicates that the module enclosed in the container is appropriate for the particular printing apparatus by comparing the tag configuration information with predetermined configuration parameters. For example, the printer electronic subsystem may verify that the tag information indicates that the module is intended for a printing apparatus with the appropriate type of maintenance agreement that covers the particular printing apparatus 70. In an alternative, the electronic subsystem may use the tag information from the tag on the container to determine the type of material in the container. The printer electronic subsystem 80 may be configured to perform various actions depending on the information received. For example, the information received from the tag may indicate to the electronic subsystem how the printer should be configured to take advantage of the module contained in the container. The electronic subsystem can also be configured to issue a notice on a printer user interface, such as a graphical display 84, if the tag information read from the module tag indicates that an incorrect module is being presented to the printing apparatus. The electronic subsystem may even be programmed to block insertion of the module into the printing apparatus if the information read from the tag memory does not agree with the expected information.

In certain implementations, a module tag 20 is attached directly to the module 30 so that the contents of the module tag can be read by a printer tag reader 76 in the printing apparatus during use of the printing apparatus. The printing apparatus may be adapted so that if the printing apparatus, through the printer tag reader, determines that the module tag is programmed with one set of configuration information, the printing apparatus operates in a first manner, or if the module tag is programmed with a second set of configuration information, the printing apparatus operates in a second, different manner. If the module is a toner cartridge for a developer 73, such differences may include adjustments such as altering the concentration of toner deposited by the developer onto the photoreceptor 74. Or the differences may include adjustments to the methodology the printing apparatus uses to estimate toner usage, or other factors affecting printer performance.

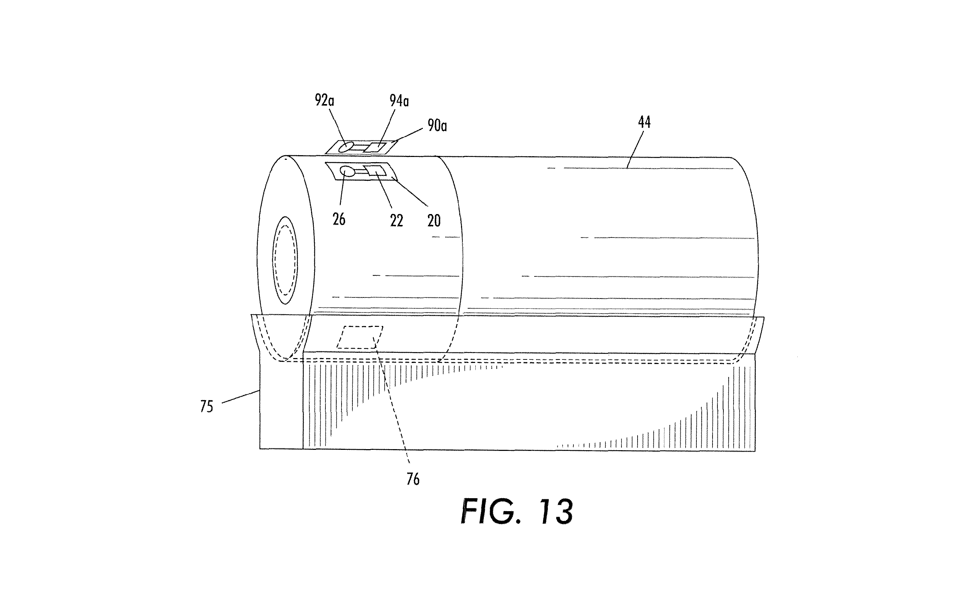

Referring, for example, to Figure 13, the printer tag reader 90 is installed adjacent where the module 30 is to be installed. For example, the printer may include an insertion tray 75 to receive the toner module. The printer tag reader 76 may be contained in the insertion tray. In other implementations, a printer tag reader 90a is mounted adjacent the insertion tray, or along the path that the module 30 takes as the module is inserted into the printer. The printer tag reader 90a includes a wireless communication element 92a and reader electronics 94a.

While the invention has been described in the context of particular implementations, those skilled in the art, after studying the present disclosure, will recognize the various modifications can be made without departing from the invention. Such modifications may include different configurations for the electronic module tag, different types of tag programmers and readers, and different placement of the electronic tag on the module, or on a container for enclosing the module. In addition, the module enclosed within the container can be a module other than a toner cartridge, and may include any type of replaceable module for a printing apparatus. Furthermore, the electronic tag can be used for modules other than replaceable modules for printing apparatus. Therefore, the scope of the invention is not to be limited to the specific implementations described above.

## Claims

1. A method of processing a module having a first programmable configuration or a second programmable configuration, the method comprising:
providing the module with an electronic module tag comprising a tag memory;
electronically obtaining module identification information from the electronic module tag;
verifying that the module identification information matches predetermined identification criteria; and
if the module identification information matches the predetermined identification criteria, selectively programming the module tag with either the first programmable configuration or the second programmable configuration.

2. The method of claim 1, wherein electronically obtaining module identification information occurs after the module is provided with the electronic module tag.

3. The method of claim 2, additionally comprising:
selectively providing either first configuration setup information or second configuration setup information; and
wherein programming the module tag with either the first programmable configuration or the second programmable configuration comprises:
programming the module tag with the first programmable configuration if the first configuration setup information is provided; and
programming the module tag with the second programmable configuration if the second configuration setup information is provided.

4. The method of claim 3, additionally comprising determining if the provided configuration setup information is authorized for the obtained module identification information.

5. The method of claim 4, additionally comprising providing a signal to a user if the provided configuration setup information is not authorized for the module identification information.

6. The method of claim 3, wherein programming the module tag with either the first programmable configuration or the second programmable configuration comprises communicating either the first programmable configuration or the second programmable configuration over a wireless communication link to the tag memory.

7. The method of claim 2, wherein the step of obtaining module identification information from the module tag comprises:
transmitting an identification request to the module tag;
causing the module tag to calculate an identification response in accordance with predetermined identification processes; and
causing the module tag to transmit the identification response.

8. The method of claim 7, wherein:
transmitting the identification request to the module tag comprises transmitting the identification request over a wireless communication link; and
causing the module tag to transmit the identification response comprises causing the module tag to transmit the identification response over the wireless communication link.

9. A method of processing a module for a printing apparatus, the method comprising:
providing a module having associated with it an electronic module tag that includes a tag memory containing tag authentication information and module identification information;
electronically reading the tag authentication information from the module tag;
electronically verifying that the tag authentication information matches predetermined authentication criteria;
electronically reading the module identification information from the module tag; and
if the tag authentication information matches the predetermined authentication criteria, electronically programming the module tag memory with module configuration information authorized for the module identification information.

10. An apparatus for programming an electronic tag associated with a module, the apparatus comprising:
a tag reader for electronically reading tag identification information from individual ones of electronic module tags that are associated with modules;
a processor for verifying that the tag identification information read from a selected one of the module tags matches predetermined identification criteria and for producing configuration information to associate with the tag identification information if the tag identification information matches the identification criteria; and
a tag writer for writing the configuration information to the selected module tag.
